# EUROPÄISCHE PATENTSCHRIFT

(11) **EP 1 994 085 B1**
(45) Veröffentlichungstag und Bekanntmachung des Hinweises auf die Patenterteilung: **13.05.2009**
(21) Anmeldenummer: 07712339.6
(22) Anmeldetag: 27.02.2007
(51) Int. Cl.: C08J 9/00, C08J 9/20

(54) **VERFAHREN ZUR HERSTELLUNG VON EXPANDIERBAREN STYROLPOLYMERISATEN**
PROCESS FOR PREPARING EXPANDABLE STYRENE POLYMERS
PROCEDE DE FABRICATION DE POLYMERES DE STYRENE EXPANSIBLES

(30) Priorität: 07.03.2006 EP 06110772
(43) Veröffentlichungstag der Anmeldung: 26.11.2008
(73) Patentinhaber: BASF SE, 67056 Ludwigshafen (DE)
(72) Erfinder: EXNER, Christian, 67433 Neustadt (DE); HOLOCH, Jan, 69181 Leimen (DE)
(86) Internationale Anmeldenummer: PCT/EP2007/051850
(87) Internationale Veröffentlichungsnummer: WO 2007/101805

(56) Entgegenhaltungen:
- DE-A1- 2 510 937
- JP-A- 2004 107 528
- US-A- 5 698 603

## Beschreibung

Die Erfindung betrifft ein Verfahren zur Herstellung von expandierbaren Styrolpolymerisaten durch Polymerisation der Monomeren in wässriger Suspension in Gegenwart eines flüchtigen Treibmittels, mit enger Perlgrößenverteilung, welche zu Schaumstoffen mit homogener Zellstruktur und geringer Wärmeleitfähigkeit verarbeitet werden können.

Schaumstoffe auf Basis von Styrolpolymerisaten haben als Wärmedämm- und Verpackungsmaterial eine große technische Bedeutung erlangt. Sie werden großtechnisch dadurch hergestellt, dass man zunächst durch Suspensionspolymerisation von Styrol in Gegenwart eines Treibmittels expandierbare Styrolpolymerisate herstellt, diese durch Erhitzen zu Schaumstoffpartikeln aufschäumt und anschließend in Formen zu Formteilen verschweißt.

Die Suspensionspolymerisation erfolgt hierbei in Gegenwart von Suspensionsstabilisatoren und üblicher styrollöslicher Polymerisationskatalysatoren.

Als Suspensionsstabilisatoren werden hierbei üblicherweise neben Molekülkolloiden wie Polyvinylalkohol (PVA) und Polyvinylpyrrolidon (PVP) schwerlösliche Salze wie Ca₃(PO₄)₂ (sogenannte Pickering-Salze) in Kombination mit Alkali- oder Erdalkali-Alkylsulfonaten eingesetzt.

In der EP-A 575 872 ist ein Verfahren zur Herstellung von perlförmigen expandierbaren Styrolpolymerisaten durch Polymerisation von Styrol in wässriger Suspension in Gegenwart von Treibmitteln beschrieben. Als Suspensionsstabilisatorsystem wird beispielsweise eine Mischung aus Magnesiumpyrophosphat, Natrium-Alkylsulfonaten und einem Natriumacrylat eingesetzt. Das Verfahren hat jedoch den Nachteil, dass eine verhältnismäßig breite Perlgrößenverteilung erhalten wird. Dies hat zur Folge, dass die gewünschten Perlfraktionen nicht ohne gleichzeitige Bildung sogenannter Randfraktion hergestellt werden können.

Die EP-A 304 582 betrifft ein Verfahren zur Herstellung von expandierbaren Styrolpolymerisaten mit enger Korngrößenverteilung durch Polymerisation von Styrol in wässriger Suspension. Als Stabilisatorsystem wird eine Mischung aus einem organischen Schutzkolloid, z.B. Polyvinylpyrrolidon oder Hydroxyethylcellulose, und einem anorganischen Stabilisator, z.B. einem Calcium- oder Barium-Phosphat oder -Sulfat eingesetzt. Zur Steuerung der Korngröße und Korngrößenverteilung werden der Suspension 50 bis 500 ppm eines vorzugsweise schwerlöslichen Carbonats zugegeben. Das Verfahren hat den Nachteil, dass die organischen Schutzkolloide eine starke Verunreinigung des Abwassers verursachen, welches aufwendig geklärt werden muss.

Die DE-A 44 31 211 beschreibt ein Verfahren zur Herstellung von expandierbaren Styrolpolymerisaten mit gleichmäßiger Schaumstruktur unter Verwendung von Polystyrolrecyclat, bei dem im Verlauf der Polymerisation 50 bis 1000 ppm, bezogen auf den Gesamtansatz aus Recyclat und Momomeren, eines Alkyl-di(2-hydroxy-ethyl)-amins zugesetzt wird.

Aufgabe der vorliegenden Erfindung war es, den genannten Nachteilen abzuhelfen und ein Verfahren zur Herstellung von expandierbaren Styrolpolymerisaten mit enger Perlgrößenverteilung zu finden, welche zu Schaumstoffen mit homogener Zellstruktur und geringer Wärmeleitfähigkeit verarbeitet werden können.

Demgemäss wurde ein Verfahren zur Herstellung von expandierbaren Styrolpolymerisaten durch Polymerisation der Monomeren in wässriger Suspension in Gegenwart eines flüchtigen Treibmittels, gefunden, wobei die Polymerisation in Gegenwart von 0,1 bis 30 ppm, bezogen auf die organische Phase, eines Hydroxyalkylamins durchgeführt wird.

Überraschenderweise wurde gefunden, dass 0,1 bis 30 ppm, bevorzugt 1 bis 10 ppm, bezogen auf die organische Phase, eines Hydroxyalkylamins ausreichen, um eine ausreichend homogene Schaumstruktur und damit verbunden eine um bis zu 2 mW/mK verringerte Wärmeleitfähigkeit zu erhalten.

Bevorzugt wird das Hydroxyalkylamin bei der Herstellung der wässrigen Suspension oder während der Aufheizphase vor Erreichen einer Temperatur von 100°C zugegeben. Besonders bevorzugt wird das Hydroxylamin in der organischen Phase vorgelegt.

Als Hydroxyalkylamine werden bevorzugt Alkyl-di(2-Hydroxyethyl)amine, besonders bevorzugt C12/C14-Alkyl-di(2-hydroxyethyl)-amin, welches im Handel unter der Bezeichnung Armostat® 400 der Firma Akzo erhältlich ist, eingesetzt.

Styrolpolymerisate im Sinne der Erfindung sind Polystyrol und Mischpolymerisate des Styrols mit anderen α,β-olefinisch ungesättigten Verbindungen, die mindestens 50 Gewichtsteile Styrol einpolymerisiert enthalten. Im erfindungsgemäßen Verfahren kommen daher als Comonomere z.B. in Frage: α-Methylstyrol, kernhalogenierte Styrole, kernalkylierte Styrole, Acrylnitril, Ester der Acryl- oder Methacrylsäure von Alkoholen mit 1 bis 8 C-Atomen, N-Vinylverbindungen, wie Vinylcarbazol oder auch geringe Mengen an Verbindungen, die zwei polymerisierbare Doppelbindungen enthalten, wie Butadien, Divinylbenzol oder Butandioldiacrylat.

Im erfindungsgemäßen Verfahren werden als bevorzugte flüchtige Treibmittel 1 bis 10 Gew.-%, vorzugsweise 3 bis 8 Gew.-%, eines C₃- bis C₇-Kohlenwasserstoffs, wie Propan, Butan, Isobutan, n-Pentan, i-Pentan, Neopentan und/oder Hexan eingesetzt. Grundsätzlich können auch andere flüchtige Substanzen verwendet werden.

Die Polymerisation wird durch übliche styrollösliche Katalysatoren ausgelöst, beispielsweise Dibenzoylperoxid, tert. Butylperbenzoat, Dicumylperoxid, Ditert.butylperoxid und deren Mischungen, vorzugsweise in Mengen von 0,05 bis 1 Gew.-%, bezogen auf die Monomeren.

Die Styrolpolymerisate können auch übliche Zusätze an anderen Stoffen enthalten, die den expandierbaren Produkten bestimmte Eigenschaften verleihen. Genannt seien beispielsweise Flammschutzmittel auf Basis von organischen Brom- oder Chlorverbindungen, wie Trisdibrompropylphosphat, Hexabromcyclododecan, Tetrabrombisphenol-A-Derivate, bromierte Diphenylethane, Chlorparaffin, sowie Synergisten für Flammschutzmittel, wie Dicumyl und hochzersetzliche organische Peroxide; ferner Antistatika, Stabilisatoren, Farbstoffe, Schmiermittel, Füllstoffe und beim Vorschäumen antiverklebend wirkende Stoffe, wie Zinkstearat, Melaminformaldehydkondensate oder Kieselsäure, sowie Mittel zur Verkürzung der Entformzeit beim Ausschäumen, wie z.B. Glycerinester oder Hydroxycarbonsäureester. Die Zusatzstoffe können je nach der beabsichtigten Wirkung in den Teilchen homogen verteilt oder als Oberflächenbeschichtung vorliegen.

Geeignete Zusatzstoffe zur Erniedrigung der Wärmeleitfähigkeit sind Kohlenstoffpartikel, wie Ruß und Graphit. Geeignet sind alle üblichen Rußsorten, wobei Flammruß mit einer Partikelgröße von 80 bis 120 nm bevorzugt ist. Ruß wird vorzugsweise in Mengen von 2 bis 10 Gew.-% eingesetzt. Besonders gut geeignet ist aber Graphit, wobei eine mittlere Partikelgröße von 0,5 bis 200 µm, vorzugsweise von 1 bis 25 µm, und insbesondere von 2 bis 20 µm, ein Schüttgewicht von 100 bis 500 g/l und eine spezifische Oberfläche von 5 bis 20 m²/g bevorzugt sind. Es kann Naturgraphit oder gemahlener synthetischer Graphit eingesetzt werden. Die Graphitpartikel sind im Styrolpolymerisat in Mengen von 0,1 bis 25 Gew.-%, insbesondere von 0,5 bis 8 Gew.-% enthalten.

Entsprechend werden die Zusatzstoffe im erfindungsgemäßen Verfahren zugegeben oder anschließend auf die erfindungsgemäß hergestellten expandierbaren Styrolpolymerisate aufgebracht.

Die Suspensionspolymerisation von Styrol ist an sich bekannt. Sie ist ausführlich beschrieben im Kunststoff-Handbuch, Band V, "Polystyrol", Carl Hanser-Verlag, 1969, Seiten 679 bis 688. Dabei wird im allgemeinen Styrol, ggf. zusammen mit den oben genannten Comonomeren, in Wasser suspendiert und in Gegenwart von organischen oder anorganischen Suspensionsstabilisatoren auspolymerisiert.

Im erfindungsgemäßen Verfahren werden perlförmige expandierbare Styrolpolymerisate hergestellt durch Polymerisation von Styrol, ggf. zusammen mit bis zu 50 Gew.-% der obengenannten Comonomeren, in wässriger Suspension, wobei vor, während oder nach der Polymerisation die oben beschriebenen Treibmittel und gegebenenfalls übliche Zusatzstoffe in wirksamen Mengen zugesetzt werden. Das Volumenverhältnis Wasser zu organischer Phase liegt vorzugsweise zwischen 0,5 und 1,6, insbesondere zwischen 1,0 und 1,4.

Man kann die Polymerisation auch in Gegenwart eines üblichen Kettenüberträgers ausführen, der das Molekulargewicht regelt. Vorzugsweise wird tert.-Dodecylmercaptan oder DMS (dimeres α-Methylstyrol) verwendet. Der Regler wird im allgemeinen in einer Menge von 0,0001 bis 0,5 Gew.-%, bezogen auf Monomere, verwendet.

Zur Stabilisation der wässrigen Suspension wird bevorzugt ein Phosphat, besonders bevorzugt Magnesiumpyrophosphat oder Tricalciumphosphat verwendet.

Für das erfindungsgemäße Verfahren wird bevorzugt eine Mischung aus Magnesiumpyrophosphat, einem sekundären Alkali- oder Erdalkali-Alkylsulfonat und gegebenenfalls einem eine Doppelbindung tragenden Carboxylat als Suspensionsstabilisatorsystem verwendet. Das Carboxylat verbessert das Stabilisierungsvermögen und verhindert Belagbildung an den Kesselwänden. Darüber hinaus werden auch die Produkteigenschaften, wie Expandiervermögen und elektrostatische Aufladbarkeit, günstig beeinflusst.

Magnesiumpyrophosphat wird in der Regel zu Polymerisationsbeginn vorgelegt und im allgemeinen in einer Konzentration zwischen 0,03 und 2,0, vorzugsweise zwischen 0,05 und 0,5 und besonders bevorzugt zwischen 0,1 und 0,2 Gew.-%, bezogen auf die wässrige Phase, eingesetzt.

Das Magnesiumpyrophosphat wird vorzugsweise unmittelbar vor der Polymerisation durch Vereinigung möglichst konzentrierter Lösungen von Pyrophosphat und Magnesiumionen hergestellt, wobei die zur Fällung von Mg₂P₂O₇ stöchiometrisch erforderliche Menge eines Magnesiumsalzes eingesetzt wird. Das Magnesiumsalz kann in fester Form oder in wässriger Lösung vorliegen. In einer bevorzugten Ausführungsform wird das Magnesiumpyrophosphat durch Vereinigung wässriger Lösungen von Natriumpyrophosphat (Na₄P₂O₇) und Magnesiumsulfat (MgSO₄ 7 H₂O) hergestellt. Das Magnesiumsalz wird in mindestens der stöchiometrisch erforderlichen Menge, vorzugsweise in stöchiometrischer Menge, zugegeben. Für das erfindungsgemäße Verfahren ist günstig, wenn kein Überschuss an Alkalipyrophosphat vorliegt.

Im erfindungsgemäßen Verfahren werden bevorzugt Sulfonatgruppen enthaltende Emulgatoren, sogenannte Extender eingesetzt. Zu diesen Extendern gehören beispielsweise Natriumdodecylbenzolsulfonat, langkettige Alkylsulfonate, Vinylsulfonat, Diisobutyhaphthaiinsuifonat. Als Extender werden bevorzugt Alkalisalze der Dodecylbenzolsulfonsäure und/oder Alkalisalze eines Gemisches von C₁₂-C₁₇-Alkylsulfonsäuren eingesetzt. Ein besonders geeignetes Gemisch von C₁₂-C₁₇-Alkylsulfonaten besteht aus überwiegend sekundären Natriumalkylsulfonaten mit der mittleren Kettenlänge C₁₅. Ein derartiges Gemisch wird unter der Bezeichnung Mersolat® K 30 von der Firma Bayer AG vertrieben. Die Extender erhöhen die Fähigkeit schwerlösliche anorganische Verbindungen, die Suspension zu stabilisieren.

Die Extender werden in der Regel in Mengen zwischen 0,5 und 15, vorzugsweise 2 bis 10 Gew.-%, bezogen auf Magnesiumpyrophosphat, eingesetzt.

Durch Anpassung der Dosierzeiten des Extenders kann der gewünschte Perldurchmesser d' in weiten Bereichen gezielt eingestellt werden (beispielsweise im Bereich von 0,5 bis 3 mm). Die Beeinflussung der Perlgrößenverteilung gelingt bevorzugt durch den Zusatz von Carbonat/Hydrogencarbonat.

Bevorzugt werden bei der Polymerisation 1 bis 1000, vorzugsweise 50 bis 500 ppm, bezogen auf die Wasserphase eines wasserlöslichen Carbonats und/oder Hydrogencarbonats zugesetzt. Wird das Carboxylat in Form von Säure, z.B. Acrylsäure eingesetzt, dann bildet diese mit Carbonationen eine äquivalente Menge Hydrogencarbonat. Dies muss bei der nachstehenden quantitativen Betrachtung berücksichtigt werden. Es hat sich gezeigt, dass ein Molverhältnis Carbonat : Hydrogencarbonat-Ionen von 3 : 1 bis 1 : 5, vorzugsweise von 1 : 0 bis 1 : 2 in der Suspension optimal ist. Geeignete Carbonat- bzw. Hydrogencarbonate sind solche von Natrium, Kalium und Ammonium. Es ist günstig, die Carbonate bzw. Hydrogencarbonats im Verlauf der Polymerisation bei einem Styrol-Umsatz von mindestens 5 %, vorzugsweise mindestens 20 % zuzusetzen. Setzt man das Carbonat gleich zu Beginn der Polymerisation zu, dann besteht die Gefahr, dass der Ansatz koaguliert.

Es hat sich gezeigt, dass es für die Stabilität der Suspension günstig ist, wenn bei Beginn der Suspensionspolymerisation eine Lösung von Polystyrol (bzw. einem entsprechenden Styrolcopolymerisat) in Styrol (bzw. der Mischung von Styrol mit Comonomeren) vorliegt. Bevorzugt geht man dabei von einer 0,5 bis 30, insbesondere 3 bis 20 gew.-%igen Lösung von Polystyrol in Styrol aus. Man kann dabei frisches Polystyrol in Monomeren auflösen, zweckmäßigerweise setzt man aber sogenannte Randfraktionen ein, die bei der Auftrennung des bei der Herstellung von expandierbarem Polystyrol anfallenden Perlspektrums als zu große oder zu kleine Perlen ausgesiebt werden.

Die erfindungsgemäß hergestellten treibmittelhaltigen Styrolpolymerisat-Teilchen haben im allgemeinen einen Durchmesser zwischen 0,2 und 4 mm. Sie können nach üblichen Methoden, z.B. mit Wasserdampf, zu Schaumstoffteilchen mit einem Durchmesser zwischen 0,1 und 2 cm und einer Schüttdichte zwischen 5 und 100 kg/m³ vorgeschäumt werden.

Die vorgeschäumten Teilchen können dann nach üblichen Verfahren zu Schaum-Formteilen mit einer Dichte von 5 bis 100 kg/m³ ausgeschäumt werden.

Das erfindungsgemäße Verfahren weist zahlreiche Vorteile auf. Die. Teilchendurchmesser der expandierbaren perlförmigen Styrolpolymerisate lassen sich gut und präzise steuern. Die treibmittelhaltigen expandierbaren Perlpolymerisate weisen niedrige Innenwassergehalte, ein hohes Expandiervermögen und gute und konstante Verarbeitungseigenschaften auf. Überdies ist die Neigung zur elektrostatischen Aufladung gering.

Es ist außerdem möglich, verschiedene organische Monomerphasen ohne neue Abstimmung des Stabilisatorsystems einzusetzen (z.B. für flammgeschützte und nichtflammgeschützte Marken).

Das im erfindungsgemäßen Verfahren gebildete Abwasser weist eine nur geringe Belastung durch organische Verbindungen auf. Eine zusätzliche biologische Klärung ist problemlos möglich. Außerdem ist bei der Aufarbeitung des Produktes keine Säurewäsche oder sonstige umständliche Waschoperation erforderlich.

Nach dem erfindungsgemäßen Verfahren können expandierbare Styrolpolymersiate mit einer engen und steuerbaren Perlgrößenverteilung erhalten werden. Dadurch kann flexibel und ökonomisch auf fluktuierende Marktanforderungen für bestimmte Perlgrößen reagiert werden. Die nach dem Verschäumen erhältliche homogene Schaumstruktur wirkt sich vorteilhaft auf die mechanischen und thermischen Eigenschaften des Schaumstoffes aus. Durch die gleichmäßige Schaumstruktur kann die Wärmedämmeigenschaft durch Verringerung der Wärmeleitfähigkeit verbessert werden, ohne die mechanischen Eigenschaften negativ zu beeinflussen.

### Beispiele:

### Herstellung einer Mg₂P₂O₇-Suspension:

Zur Herstellung einer Mg₂P₂O₇-Suspension wurden für jedes der folgenden Beispiele vorab jeweils 1,20 kg Na₄P₂O₇ in 50 kg Wasser bei Raumtemperatur gelöst. Unter Rühren wurde zu dieser Lösung eine Lösung aus 2,22 kg MgSO₄ x 7 H₂O in 8,00 kg Wasser gegeben und anschließend für 5 Minuten gerührt. Es entstand eine wässrige Suspension von Magnesiumpyrophosphat (MPP).

### Beispiel 1:

In einem druckfesten Rührkessel aus korrosionsfestem Edelstahl mit Kreuzbalkenrührer wurden 550 I Wasser vorgelegt und unter Rühren die Mg₂P₂O₇-Suspension zugefügt. Anschließend wurden 590 kg Styrol zusammen mit 2,99 kg Dicumylperoxid und 0,04 kg Benzoylperoxid Lucidol® (75%ig), 3,90 kg Hexabromocyclododekan, 3 ppm C₁₂/C₁₄-Alkyl-di(2-hydroxyethyl)-amin (Armostat® 400 der Firma Akzo) und 310 ppm Polyethylenwachs (bez. organische Phase) zugegeben.

Der Rührkessel wurde verschlossen, ein Stickstoffdruck von 1 bar eingestellt und in 1,8 h auf 105°C erhitzt. Danach wurde die Mischung in 5,5 h auf 135°C erhitzt. Anschließend rührte man die Mischung noch für weitere 0,5 h bei 135°C.

Etwa 110 min nach Erreichen einer Temperatur von 80°C wurden 0,12 kg einer 40 %igen wässrigen Lösung von Mersolat® K30 (Fa. Bayer, Gemisch aus C₁₂-C₁₇-Natriumalkylsulfonaten) hinzugefügt. 50 min nach Erreichen einer Temperatur von 80 °C wurden 0,24 kg Natriumhydrogencarbonat und 0,15 kg Natriumcarbonat der Suspension zugesetzt. 120 min später wurden 46,4 kg Pentan zugefügt. Nach 324 min wurden 0,98 kg Bittersalz zugegeben.

### Beispiel 2

In einem druckfesten Rührkessel aus korrosionsfestem Edelstahl mit Kreuzbalkenrührer wurden 550 I Wasser vorgelegt und unter Rühren die Mg₂P₂O₇-Suspensio zugefügt. Anschließend wurden 590 kg Styrol zusammen mit 2,99 kg Dicumylperoxid und 0,04 kg Lucidol® (75%ig), 3,90 kg Hexabromocyclododekan, 3 ppm Armostat® 400 und 310 ppm Polyethylenwachs (bez. organische Phase) zugegeben.

Der Rührkessel wurde verschlossen, ein Stickstoffdruck von 1 bar eingestellt und in 1,8 h auf 105°C erhitzt. Danach wurde die Mischung in 5,5 h auf 135°C erhitzt. Anschließend rührte man die Mischung noch für weitere 0,5 h bei 135°C.

Etwa 110 min nach Erreichen einer Temperatur von 80°C wurden 0,12 kg einer 40 %igen wässrigen Lösung von Mersolat®K30 hinzugefügt. 50 min nach Erreichen einer Temperatur von 80°C wurden 0,25 kg Natriumcarbonat der Suspension zugesetzt. 120 min später wurden 46,4 kg Pentan zugefügt. Nach 324 min wurden 0,98 kg Bittersalz zugegeben.

### Beispiel 3

In einem druckfesten Rührkessel aus korrosionsfestem Edelstahl mit Kreuzbalkenrührer wurden 550 I Wasser vorgelegt und unter Rühren die Mg₂P₂O₇-Suspensio zugefügt. Anschließend wurden 590 kg Styrol zusammen mit 2,99 kg Dicumylperoxid und 0,04 kg Lucidol® (75%ig), 3,90 kg Hexabromocyclododekan, 3 ppm Armostat® 400 und 310 ppm Polyethylenwachs (bez. organische Phase) zugegeben.

Der Rührkessel wurde verschlossen, ein Stickstoffdruck von 1 bar eingestellt und in 1,8 h auf 105°C erhitzt. Danach wurde die Mischung in 5,5 h auf 135°C erhitzt. Anschließend rührte man die Mischung noch für weitere 0,5 h bei 135°C.

Etwa 110 min nach Erreichen einer Temperatur von 80°C wurden 0,12 kg einer 40 %igen wässrigen Lösung von Mersolat® K30 hinzugefügt. Nach 244 min wurden 46,4 kg Pentan zugefügt.

### Beispiel 4

In einem druckfesten Rührkessel aus korrosionsfestem Edelstahl mit Kreuzbalkenrührer wurden 550 I Wasser vorgelegt und unter Rühren die Mg₂P₂O₇-Suspensio zugefügt. Anschließend wurden 590 kg Styrol zusammen mit 2,99 kg Dicumylperoxid und 0,04 kg Lucidol® (75%ig), 3,90 kg Hexabromocyclododekan und 310 ppm Polyethylenwachs (bez. organische Phase) zugegeben.

Der Rührkessel wurde verschlossen, ein Stickstoffdruck von 1 bar eingestellt und in 1,8 h auf 105°C erhitzt. Danach wurde die Mischung in 5,5 h auf 135 °C erhitzt. Anschließend rührte man die Mischung noch für weitere 0,5 h bei 135°C.

Etwa 110 min nach Erreichen einer Temperatur von 80 °C wurden 0,12 kg einer 40 %igen wässrigen Lösung von Mersolat® K30 hinzugefügt. 50 min nach Erreichen einer Temperatur von 80°C wurden 0,24 kg Natriumhydrogencarbonat und 0,15 kg Natriumcarbonat der Suspension zugesetzt. 120 min später wurden 46,4 kg Pentan zugefügt. Nach 324 min wurden 0,98 kg Bittersalz zugegeben.

### Beispiel 5

In einem druckfesten Rührkessel aus korrosionsfestem Edelstahl mit Kreuzbalkenrührer wurden 550 I Wasser vorgelegt und unter Rühren die Mg₂P₂O₇-Suspension zugefügt. Anschließend wurden 590 kg Styrol zusammen mit 2,99 kg Dicumylperoxid und 0,04 kg Lucidol® (75%ig), 3,90 kg Hexabromocyclododekan und 310 ppm Polyethylenwachs (bez. organische Phase) zugegeben.

Der Rührkessel wurde verschlossen, ein Stickstoffdruck von 1 bar eingestellt und in 1,8 h auf 105°C erhitzt. Danach wurde die Mischung in 5,5 h auf 135°C erhitzt. Anschließend rührte man die Mischung noch für weitere 0,5 h bei 135°C.

Etwa 110 min nach Erreichen einer Temperatur von 80°C wurden 0,12 kg einer 40 %igen wässrigen Lösung von Mersolat® K30 hinzugefügt. Nach 244 min wurden 46,4 kg Pentan zugefügt.

Nach dem Abkühlen wurde dann das erhaltene Perlpolymerisat jeweils von der wässrigen Phase getrennt, gewaschen, oberflächengetrocknet und mit 0,1 Gew.-% (bezogen auf das Gewicht der unbeschichteten EPS-Perlen) Mersolat® K30 beschichtet. Der mittlere Perldurchmesser d' und die Verteilungsbreite β, welches Masse für die Perlgrößenverteilung sind, wurden nach Rosin-Ramfnler-Sperling-Bennett gemäss DIN 66 145 bestimmt.

100 Teile des expandierbaren Polystyrolgranulates mit der Perlgrößenfraktion zwischen 1,00 mm und 1,96 mm wurden durch Auftrommeln im Schaufelmischer jeweils während 4 Minuten mit 0,45 Teilen eines Gemisches aus 0,5 Teilen Glyzerintristearat, 0,4 Teilen Glyzerinmonostearat und 0,1 Teilen Kieselsäure FK 320 (Fa. Goldschmidt) beschichtet. Die beschichteten EPS-Perlen wurden dann in einem drucklosen Schäumkasten (Fa. Rauscher) mit strömendem Wasserdampf auf ein Schüttgewicht von 14 bis 16 kg/m³ vorgeschäumt. Von den entstandenen Partikeln wurden die Schaumstrukturparameter mittels BASS-Messsystem bestimmt.

| Beispiel | d' [mm] | β [Grad] | Abweichung von der mittleren Zellzahl [%] |
|---|---|---|---|
| 1 | 1,09 | 8,6 | 18,5 |
| 2 | 1,12 | 8,3 | 20,1 |
| 3 | 0,81 | 16,3 | 17,9 |
| 4 | 1,04 | 8,7 | 39,6 |
| 5 | 0,79 | 17,2 | 36,4 |

## Patentansprüche

1. Verfahren zur Herstellung von expandierbaren Styrolpolymerisaten durch Polymerisation der Monomeren in wässriger Suspension in Gegenwart eines flüchtigen Treibmittels, **dadurch gekennzeichnet, dass** die Polymerisation in Gegenwart von 0,1 bis 30 ppm, bezogen auf die organische Phase, eines Hydroxyalkylamins durchgeführt wird.

2. Verfahren nach Anspruch 1, **dadurch gekennzeichnet, dass** das Hydroxyalkylamin bei der Herstellung der wässrigen Suspension oder während der Aufheizphase vor Erreichen einer Temperatur von 100°C zugegeben wird.

3. Verfahren nach Anspruch 1 oder 2, **dadurch gekennzeichnet, dass** als Hydroxyalkylamin Alkyl-di(2-Hydroxyethyl)amin eingesetzt wird.

4. Verfahren nach einem der Ansprüche 1 bis 3, **dadurch gekennzeichnet, dass** zur Stabilisation der wässrigen Suspension ein Phosphat verwendet wird.

5. Verfahren nach Anspruch 4, **dadurch gekennzeichnet, dass** als Phosphat Magnesiumpyrophosphat oder Tricalciumphosphat eingesetzt wird.

6. Verfahren nach einem der Ansprüche 1 bis 5, **dadurch gekennzeichnet, dass** während der Polymerisation ein wasserlösliches Carbonat oder Hydrogencarbonat in Mengen von 1 bis 1000 ppm, bezogen auf diewässrige Phase, zugegeben wird.

7. Verfahren nach Anspruch 6, **dadurch gekennzeichnet, dass** eine Mischung aus Carbonat und Hydrogencarbonat im Molverhältnis 3 : 1 bis 1 : 5 eingesetzt wird.

## Claims

1. A process for production of expandable styrene polymers via polymerization of the monomers in aqueous suspension in the presence of a volatile blowing agent, which comprises carrying out the polymerization in the presence of from 0.1 to 30 ppm, based on the organic phase, of a hydroxyalkylamine.

2. The process according to claim 1, wherein the hydroxyalkylamine is added during the preparation of the aqueous suspension or during the heating phase prior to reaching a temperature of 100°C.

3. The process according to claim 1 or 2, wherein alkyldi(2-hydroxyethyl)amine is used as hydroxyalkylamine.

4. The process according to any of claims 1 to 3, wherein a phosphate is used to stabilize the aqueous suspension.

5. The process according to claim 4, wherein magnesium pyrophosphate or tricalcium phosphate is used as phosphate.

6. The process according to any of claims 1 to 5, wherein, during the polymerization, amounts of from 1 to 1000 ppm, based on the aqueous phase, of a water-soluble carbonate or hydrogencarbonate are added.

7. The process according to claim 6, wherein a mixture is used composed of carbonate and hydrogencarbonate in a molar ratio of from 3:1 to 1:5.

## Revendications

1. Procédé pour la préparation de polymères expansibles de styrène par polymérisation des monomères en suspension aqueuse en présence d'un agent gonflant volatil, **caractérisé en ce que** la polymérisation est réalisée en présence de 0,1 à 30 ppm, par rapport à la phase organique, d'une hydroxyalkylamine.

2. Procédé selon la revendication 1, **caractérisé en ce que** l'hydroxyalkylamine est ajoutée lors de la préparation de la suspension aqueuse ou pendant la phase de chauffage avant d'atteindre une température de 100°C.

3. Procédé selon la revendication 1 ou 2, **caractérisé en ce qu'**on ajoute de l'alkyldi(2-hydroxyéthyl)amine comme hydroxyalkylamine.

4. Procédé selon l'une quelconque des revendications 1 à 3, **caractérisé en ce qu'**on utilise un phosphate pour la stabilisation de la suspension aqueuse.

5. Procédé selon la revendication 4, **caractérisé en ce qu'**on utilise du pyrophosphate de magnésium ou du phosphate tricalcique comme phosphate.

6. Procédé selon l'une quelconque des revendications 1 à 5, **caractérisé en ce qu'**on ajoute pendant la polymérisation un carbonate ou un hydrogénocarbonate soluble dans l'eau en des quantités de 1 à 1000 ppm, par rapport à la phase aqueuse.

7. Procédé selon la revendication 6, **caractérisé en ce qu'**on utilise un mélange de carbonate et d'hydrogénocarbonate dans un rapport molaire 3:1 à 1:5.
